(19) Europäisches Patentamt / European Patent Office / Office européen des brevets

(11) **EP 4 118 793 B1**

(12) **EUROPEAN PATENT SPECIFICATION**

(45) Date of publication and mention
of the grant of the patent:
**01.07.2026 Bulletin 2026/27**

(21) Application number: **21712744.8**

(22) Date of filing: **12.03.2021**

(51) International Patent Classification (IPC):
*H04L 47/34* (2022.01)     *H04L 41/08* (2022.01)
*H04L 69/14* (2022.01)

(52) Cooperative Patent Classification (CPC):
**H04L 1/08; H04L 1/1642; H04L 47/34; H04L 69/14**

(86) International application number:
**PCT/EP2021/056306**

(87) International publication number:
**WO 2021/180910 (16.09.2021 Gazette 2021/37)**

(54) **SYSTEMS AND METHODS FOR SEAMLESS RESET FOR SEAMLESS REDUNDANCY OF TSN/
DETNET**

SYSTEME UND VERFAHREN ZUR NAHTLOSEN RÜCKSTELLUNG FÜR NAHTLOSE REDUNDANZ
VON TSN/DETNET

SYSTÈMES ET PROCÉDÉS DE RÉINITIALISATION TRANSPARENTE POUR UNE REDONDANCE
TRANSPARENTE DE TSN/DETNET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2020 US 202062989340 P**

(43) Date of publication of application:
**18.01.2023 Bulletin 2023/03**

(73) Proprietor: **TELEFONAKTIEBOLAGET LM
ERICSSON (PUBL)
164 83 Stockholm (SE)**

(72) Inventors:
• **VARGA, Balázs
1162 Budapest (HU)**
• **FARKAS, János
6000 Kecskemét (HU)**

(74) Representative: **Ericsson
Patent Development
Torshamnsgatan 21-23
164 80 Stockholm (SE)**

(56) References cited:
• **BALÁZS VARGA ET AL: "802.1CB Improvements
FRER Improvements of Replication and
Elimination Functions", vol. 802.1, no. v01, 16
July 2019 (2019-07-16), pages 1 - 13,
XP068152002, Retrieved from the Internet
<URL:http://grouper.ieee.org/groups/802/1/files/
public/docs2019/
new-varga-FRER-improvements-0719-v01.pdf>
[retrieved on 20190716]**
• **"IEEE Standard for Local and metropolitan area
networks–Frame Replication and Elimination for
Reliability ; IEEE Std 802.1CB-2017", IEEE
STANDARD, IEEE, PISCATAWAY, NJ USA, 27
October 2017 (2017-10-27), pages 1 - 102,
XP068121164, ISBN: 978-1-5044-4297-8,
[retrieved on 20171031], DOI: 10.1109/
IEEESTD.2017.8091139**
• **HUAWEI ET AL: "update to Solution#3 and
Solution#4", vol. SA WG2, no. West Palm Beach,
USA; 20181126 - 20181130, 20 November 2018
(2018-11-20), XP051563609, Retrieved from the
Internet <URL:http://www.3gpp.org/ftp/Meetings
%5F3GPP%5FSYNC/SA2/Docs/S2%2D1812087%
2Ezip> [retrieved on 20181120]**

- **AHMED NASRALLAH ET AL: "Ultra-Low Latency (ULL) Networks: The IEEE TSN and IETF DetNet Standards and Related 5G ULL Research", ARXIV.ORG, CORNELL UNIVERSITY LIBRARY, 201 OLIN LIBRARY CORNELL UNIVERSITY ITHACA, NY 14853, 20 March 2018 (2018-03-20), XP081550814, DOI: 10.1109/ COMST.2018.2869350**

**Description**

Related Applications

This application claims the benefit of provisional patent application serial number 62/989,340, filed March 13, 2020.

Technical Field

The present disclosure relates to Time Sensitive Networking (TSN) and Deterministic Networking (DetNet) and, more specifically, to frame or packet replication and elimination in a TSN or DetNet network.

Background

Time-Sensitive Networking (TSN) is currently being developed at the Institute for Electronics and Electrical Engineering (IEEE) as a new technology that enhances IEEE 802.1 and IEEE 802.3 Ethernet standards to an entirely new level of determinism. It can be seen as an evolution of Ethernet to guarantee low end-to-end latency, low jitter, and low packet loss.

The TSN Task Group (TG) within the IEEE 802.1 Working Group (WG) deals with deterministic services through IEEE 802 networks. The TSN TG specifies the tools of the TSN toolbox, as well as the use of the tools for a particular purpose. TSN TG is chartered to provide deterministic services through IEEE 802 networks with:

- guaranteed packet transport,
- low packet loss,
- bounded low latency, and
- low packet delay variation.

In order to achieve extremely low packet loss, the TSN TG specified Frame Replication and Elimination for Reliability (FRER) (802.1CB), which is targeted to avoid frame loss due to equipment failure. It is practically a per-frame 1+1 (or 1+n) redundancy function. There is no failure detection / switchover incorporated. FRER sends frames on two (or more) maximally disjoint paths, then combines the streams and deletes extra frames.

Note that the same functions are defined for Deterministic Networking (DetNet) networks as Packet Replication and Elimination Functions (PREFs) in order to simplify implementation and allow use of the same concept in both Layer2 (TSN) and Layer3 (DetNet) networks. In the description provided herein, the focus is on FRER.

Note as per IEEE 802.1CB: "... this standard defines Frame Replication and Elimination for Reliability (FRER), which divides a Stream into one or more linked Member Streams, thus making the original Stream a Compound Stream. It replicates the packets of the Stream, splitting the copies into the multiple Member Streams, and then rejoins those Member Streams at one or more other points, eliminates the replicates, and delivers the reconstituted Stream from those points."

An Elimination function evaluates the "sequence_number" sub-parameter of a packet of one or more Member Streams passed up from the lower layers, in order to discard duplicated packets. The "SequenceHistory" variable maintains a history of the "sequence_number" sub-parameters of recently received packets. During duplicate elimination, "sequence_number" is checked against a history window (defined by "frerSeqRcvyHistoryLength"). Packets being outside the history window are discarded as invalid. Under normal operation, received packets are within the history window and only duplicates are dropped.

IEEE 802.1CB defines a timeout mechanism for the Elimination function in order to cope with some networking scenarios that results in unnecessarily dropped frames (e.g., if Elimination function somehow gets out of step with its corresponding Sequence generation function; if a Sequence generation function is reset; etc.). If a timeout occurs, the history is reset, and it is allowed to accept the next packet by the recovery algorithm, no matter what the value of its "sequence_number" sub-parameter (see "TakeAny" in 7.4.3.2.6 in IEEE 802.1CB).

Balázs Varga et al., "802.1CB Improvements - FRER Improvements of Replication and Elimination Functions", IEEE 802.1 TSN TG, Vienna 2019, addresses FRER operation in virtualized/cloud scenarios and, in particular, addresses unnecessary frame drops after a reset of the sequence generation function at a transmit/replication node by proposing explicit reset notification towards the receive/elimination node. A new R-TAG flag (SeqResetFlag) is set upon reset and interpreted at the receive/elimination side to trigger a reset of the sequence recovery function (SequenceRecoveryReset), thereby enabling faster adaptation and reducing drops. The document also discusses allowing controlled changes of the sequence generation parameter (GenSeqNum) to support virtualization related state synchronization.

IEEE Std 802.1CB-2017, "Frame Replication and Elimination for Reliability", FRER", specifies mechanisms for redundant transmission in bridged/TSN networks where packets are replicated for transmission and duplicates are identified and eliminated. It defines a sequence generation function that assigns a per-stream sequence number from a fixed cyclic space, incrementing and wrapping to 0 on overflow, and it defines a reset behavior. A required encoding for carrying the sequence number is the R-TAG, which contains a 16-bit Sequence Number field (and a 16-bit Reserved field). On the receive/elimination side, it specifies sequence recovery behavior including reset/timeout handling and duplicate/-out-of-order handling using modulo arithmetic on the sequence number.

Summary

Systems and methods are disclosed herein for seamless reset for seamless redundancy, e.g., of a Time-Sensitive Networking (TSN) network or a Deterministic Networking (DetNet) network.

In one embodiment, a method is performed by a receive node according to appended claim 1.

Corresponding embodiment of a receive node is disclosed according to appended claim 2.

Brief Description of the Drawings

The accompanying drawing figures incorporated in and forming a part of this specification illustrate several aspects of the disclosure, and together with the description serve to explain the principles of the disclosure.

Figure 1 illustrates a cloud based scenario requiring improvement of Frame Replication and Elimination for Reliability (FRER) functions;

Figure 2 illustrates ranges of the IEEE 802.1CB-2017 cyclic sequence number space utilized herein for analysis of probability of packet drop;

Figure 3 illustrates a system that includes a transmitting (TX) node and a receiving (RX) node;

Figure 4 illustrates an example of a relation of a new (linear) sequence number space and the original (cyclic) sequence number space utilized for FRER in accordance with embodiments of the present disclosure;

Figure 5 illustrates a state diagram for a replication function at the TX node;

Figure 6 is a flow chart that illustrates the operation of the replication function at the TX node;

Figure 7 is a flow chart that illustrates the operation of the replication function at the TX node;

Figure 8 illustrates a state diagram for an elimination function at the RX node in accordance with one embodiment of the present disclosure;

Figures 9A and 9B provide a flow chart that illustrates the operation of the elimination function at the RX node according to one embodiment of the present disclosure;

Figure 10 illustrates the R-TAG format in accordance with IEEE 802.1CB and in which a *"SeqResetFlag"*, a *"InitSeqFlag",* and a "new sequence number belonging to the linear sequence number space" may be encoded in accordance with one embodiment of the present disclosure; and

Figures 11, 12, and 13 are schematic block diagrams of a network node.

Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure as defined by the appended claims.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description. The scope of the invention is defined by the appended claims.

**TSN Node:** As used herein, a Time Sensitive Networking (TSN) node is any network node in a TSN network. Examples of a TSN node include a TSN endpoint and a TSN bridge.

There currently exist certain challenge(s) with respect to TSN and Deterministic Networking (DetNet). The mechanisms available for reset of seamless redundancy functions include too many unnecessary packet drops and are not cloud ready. As the ultimate goal of seamless redundancy is to avoid packet loss as much as possible. The unnecessary packet drops due to the operations of a seamless redundancy mechanism should be minimized. Furthermore, moving seamless redundancy (e.g., Institute for Electronics and Electrical Engineering (IEEE)802.1CB) components to a cloud environment creates challenges regarding availability, so seamless redundancy functions are reset much more frequently than in current industrial hardware environments. Therefore, seamless detection and adaptation to scenarios caused by reset of seamless redundancy (e.g., IEEE 802.1CB) functions are essential.

In addition, the above-described history window and timeout mechanism require good design of related parameters. However, these are not trivial tasks as contradicting requirements must be fulfilled. During the history window design, one may intend to select a small window size, for example, in order to protect the Elimination node resources or to protect against bogus packets (security). In contrast, large window size values are more tolerant to network failures and errors. It may be a hard task to find an optimum window size. Similarly, designing a too low timeout parameter value may cause frequent (and unnecessary) reset of the Elimination function. On the other hand, a too large timeout parameter value slows down the recovery after failure scenarios and causes unwanted networking transient. Furthermore, using Frame Replication and Elimination for Reliability (FRER) for bursty (non-Constant Bit Rate (CBR)) streams makes the above design more challenging or even impossible to find a right balance.

In our former PCT Patent Application International Publication No. WO2021005397A1 (hereinafter referred to as "the '397 Application"), an explicit notification solution is described that is based on a new flag included in the R-TAG, namely the *"SeqResetFlag".* This flag is set by the Replication function when the sequence generation function was reset, so such events can be recognized easily by the Elimination functions. With this solution, the focus is on the scenario where frames might be dropped unnecessarily (with a high probability) when the sequence generation function was reset. This solution provides a much better solution than IEEE 802.1CB-2017 when the sequence generation function was reset, but it cannot provide fully lossless recovery in all cases. It may result in some dropped packets after the reset event.

Certain aspects of the present disclosure and their embodiments may provide solutions to the aforementioned or other challenges. Systems and methods are described herein that provide seamless recovery for sequence number based seamless redundancy mechanisms after a sequence number generation reset event.

Embodiments of the solution proposed herein target solving the scenario where frames are dropped unnecessarily by IEEE 802.1CB-2017 functions due to the reset of the sequence generation function.

Aspects of the proposed solution include:

1. an explicit notification of the reset event, and
2. adding a new linear initial sequence number space to the existing cyclic sequence number space of IEEE 802.1CB-2017.

Note that the existing cyclic sequence number space of IEEE 802.1CB-2017 is referred to in this document as the "original sequence number space".

Explicit notification of the reset event is based on a flag included in the R-TAG, which is referred to herein as the *"SeqResetFlag".* The usage of the new linear initial sequence number space (which is referred to herein as *"InitSeqNumSpace"*) is noted via a new flag included in the R-TAG, which is referred to herein as the *"InitSeqFlag".* Sequence values of the new number space (*"InitSeqNumSpace"*) are also included in the R-TAG.

While the embodiments described herein focus on FRER of TSN, the solutions proposed herein are also applicable to PREF of DetNet or other seamless redundancy mechanisms based on sequence numbering or equivalent functionality (e.g., provided by timestamps).

Embodiments of the solution described herein enable cloudification of seamless redundancy by providing seamless reset for sequence number generation (Sequence generating function) via improvements of, e.g., the Replication and Elimination function of IEEE 802.1CB-2017. In some embodiments, the following aspects are introduced (1) a new flag for explicit indication of the Sequence generating function reset and (2) the use of a new linear initial sequence number space to the existing cyclic sequence number space of, e.g., IEEE 802.1CB-2017. Again, while the description provided herein focuses on FRER as defined in IEEE 802.1CB, the solution described herein is applicable to FRER of TSN, PREF of DetNet, or other seamless redundancy mechanisms based on sequence numbering or equivalent functionality (e.g., provided by timestamps).

There are, proposed herein, various embodiments which address one or more of the issues disclosed herein. Certain embodiments may provide one or more of the following technical advantage(s). Embodiments of the proposed solution described herein enable cloudification of seamless redundancy by providing seamless reset for sequence number generation (Sequence generating function) via improvements of the Replication and Elimination function of IEEE 802.1CB-2017. These improvements ensure much faster and seamless adaptation to network failure scenarios and protect again unnecessary packet drops when sequence generation is reset.

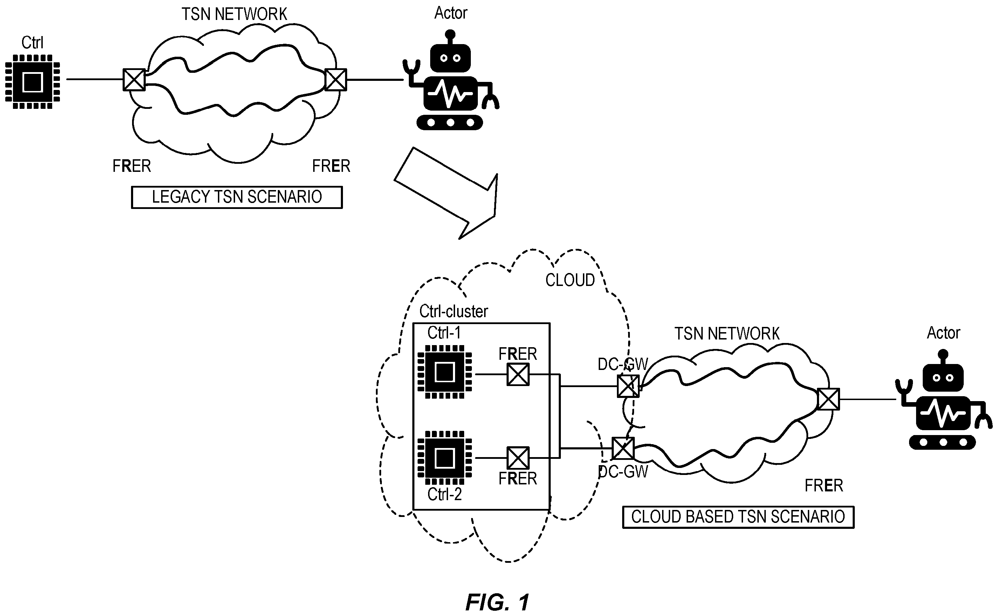

The main motivation for these improvements is to allow cloudification, i.e., "cloud native" implementation of FRER/ Packet Replication and Elimination Function (PREF) functions. Today's trend is to move applications towards virtualized environments. This trend has reached applications used in industrial environments as well, see, e.g., edge computing, fog computing. Using FRER/PREF in a cloud-based scenario, where Talkers/Listeners (Sources/Destinations) are moved to the Cloud, creates many additional challenges for the FRER/PREF functions. FRERs/PREFs are TSN/DetNet functions that belong to the endpoints, so FRER/PREF must work inside the Cloud. For example, a FRER/PREF is usually an instance in a controller-cluster (ctrl-cluster) serving an industrial application in a cloud, as illustrated in Figure 1. In this regard, Figure 1 illustrates a Cloud based scenario requiring improvement of FRER functions.

Typical Cloud actions like running multiple Virtual Machines (VMs)/containers/instances, creating a VM/container/instance, moving a VM/container/instance, resetting a function, removing a VM/container/instance, etc. require FRER functions to adapt to the changing environment seamlessly. Changes in this environment are much more frequent than in current industrial network scenarios or network deployments without cloud.

High availability systems require the elimination of any single point of failure. Therefore, FRER/PREF functions (i.e., Sequence generation) must be improved to be able to support various Cloud specific redundancy solutions.

Using FRER of IEEE 802.1CB as an example, the impact of the reset of the sequence number generation function depends on the actual value of the sequence_number used for the last packet sent before the reset (noted here as $SN_L$) and the value of the sequence_number used for the first packet sent after the reset (noted here as $SN_R$). According to IEEE 802.1CB-2017, $SN_R$ is always 0 and $SN_L$ is a value in the range of {0; ... ; GenSeqSpace - 1}.

The following ranges can be defined to analyze the impact of the reset for (1) the solution described in IEEE 802.1CB-2017, (2) the solution described in the '397 Application, and (3) the solution described herein.

- A:

$$SN_R > SN_L + d$$

- B:

$$SN_L + d >= SN_R > SN_L$$

- C:

$$SN_L >= SN_R > SN_L - d$$

- D:

$$SN_L - d >= SN_R > SN_L - 2d$$

- E:

$$SN_L - 2d >= SN_R$$

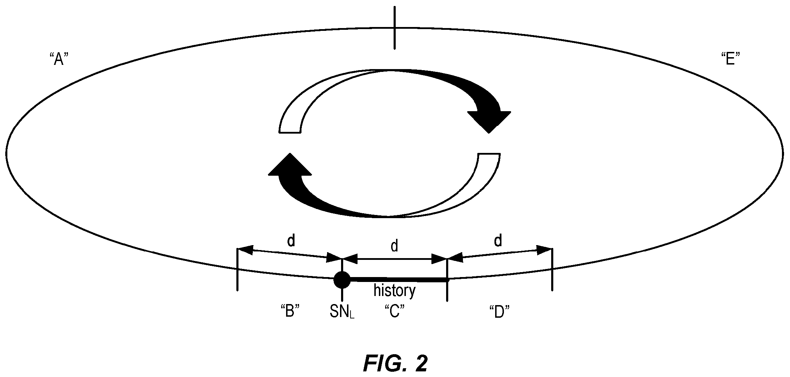

where d = "frerSeqRcvyHistoryLength" defined in IEEE 802.1CB-2017. Note that due to the cyclic characteristic of the original sequence number space, "A" and "E" are adjacent ranges, where the border between them is be defined here for the analysis as $modulo_{GenSeqSpace}(SN_L + GenSeqSpace/2)$. Figure 2 illustrates the ranges of the cyclic sequence number space.

The assumption for the analysis is that (i) there are no other events in the network, only the sequence generation function is reset and (ii) the "frerSeqRcvyHistoryLength" (d) takes value of 100 for the probability calculations.

**For the evaluation of the solution described in IEEE 802.1CB-2017,** the following range is important:

-

$$\text{history window (HSW)} = \{ SN_L + d; .. ; SN_L - d + 1 \},$$

where d = "frerSeqRcvyHistoryLength".

Note that HSW is practically the merger of range "B" and range "C" used for the evaluation.

As per IEEE 802.1CB-2017, packets with a sequence_number out of the history window (HSW) are dropped and packets within the history window are evaluated against the "SequenceHistory" to decide whether or not they are duplicates. Therefore, IEEE 802.1CB-2017 operates as follows for each of the ranges A-E:

A: packets are dropped until timer expires or the sequence_number of packets reaches $SN_L$ + 1,
B: no packet drop, $SN_R$ is accepted,
C: packets are dropped until sequence_number of packets reaches $SN_L$ + 1,
D: packets are dropped until sequence_number of packets reaches $SN_L$ + 1,
E: packets are dropped until timer expires or the sequence_number of packets reaches $SN_L$ + 1.

That is, there is high probability of packet drop (99.8%) in most cases until timeout triggers the accept of the next packet. Note that packet drop means packet loss for the application whose operation may be damaged by the lost packets.

For the evaluation of the solution described in the '397 Application, the following additional range is important:

- 

$$\text{reset ignore range (RIR)} = \{\ SN_L + d;\ ..\ ;\ SN_L - 2d + 1\ \},$$

where d = "frerSeqRcvyHistoryLength"

Note that RIR is practically the merger of range "B", range "C", and range "D" used for the evaluation.

RIR is the range where the Eliminator function ignores the received *"SeqResetFlag"* and checks the received packet against the HSW. Note that range "D" is also part of RIR, as duplicates over the slower redundancy paths may have a sequence_number below $SN_L$ and can be as low as $SN_L$ - d. Therefore, the solution described in the '397 Application behaves as follows for each of the ranges:

A: no packet drop, $SN_R$ accepted,
B: no packets drop, $SN_R$ accepted,
C: packet drop until sequence_number of packets reaches $SN_L$ + 1,
D: packet drop until sequence_number of packets reaches $SN_L$ + 1,
E: no packet drop, $SN_R$ accepted.

There is a low probability of packet drop (0.3%) in most cases. When packet drop does happen, it is limited to a maximum of "2d" number of packets after the reset. Some TSN applications may tolerate this when reset occurs, some may not.

**The solution described herein** has the following characteristics for each of the ranges:

A: no packet drop, $SN_R$ accepted,
B: no packet drop, $SN_R$ accepted,
C: no packet drop, $SN_R$ accepted,
D: no packet drop, $SN_R$ accepted,
E: no packet drop, $SN_R$ accepted.

There is no packet drop. Packets sent after the reset are immediately considered valid. TSN applications are not impacted at all, and the implementation impact on FRER nodes is moderate.

Systems and methods are disclosed herein for improving the elimination function in a TSN network using FRER in accordance with IEEE 802.1CB (or likewise in a DetNet network using PREFs. Note that the discussion herein uses IEEE 802.1CB terminology and variable names where appropriate, denoted as *"VariableName"*. New variables, functions, and parameters follow IEEE 802.1CB naming conventions and are denoted as *"NewEntityName"*.

From now on, the description focuses on embodiments of the proposed solution for IEEE 802.11 FRER and as such uses terms and notations as described in 802.1CB-2017 FRER. However, the solution proposed herein is equally applicable to other seamless redundancy mechanisms (e.g., PREF for DetNet) based on sequence numbering or equivalent functionality (e.g., provides by timestamps).

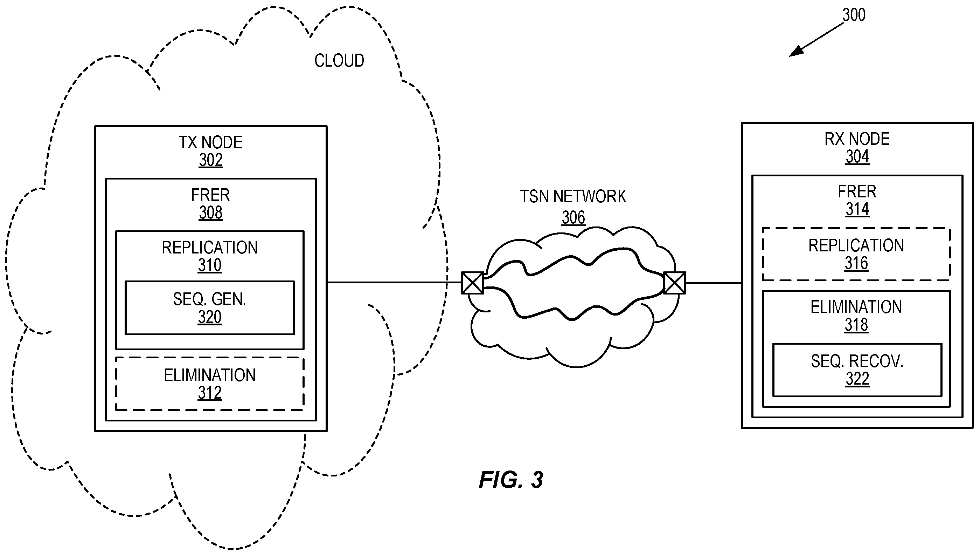

Figure 3 illustrates a system 300 that includes a transmitting (TX) node 302 and a receiving (RX) node 304 where the TX node 302 transmits a replicated stream of packets to the RX node 304 via a TSN network 306. Note that the TX node 302 and RX node 304 may be, for example, TSN endpoints, TSN bridges, or any other type of TSN node, in this example. Transmission of the replicated stream of packets involves replicating a Stream of packets into multiple Member Streams to thereby provide a Compound Stream. The Member Streams are then transmitted to the RX node 304 via the TSN network 306 via maximally disjoint paths. Note that while the nodes 302 and 304 are denoted herein as "TX node" and "RX node", respectively, it should be understood that these nodes may both transmit and receive streams via the TSN network 306.

As illustrated, the TX node 302 includes a FRER function 308 that operates to provide FRER in accordance with, in this example, IEEE 802.1CB. The FRER 308 includes a Replication function 310 and an Elimination function 312 (illustrated as optional in the sense that it is not used for transmission of the Stream to the RX node 304). In a similar manner, the RX node 304 includes a FRER function 314 that operates to provide FRER in accordance with, in this example, IEEE 802.1CB. The FRER 314 includes a Replication function 316 (illustrated as optional in the sense that it is not used for reception of the Stream from the TX node 302) and an Elimination function 322.

As illustrated, the Replication function 310 includes a Sequence Generation function 320. The Sequence Generation function 320 operates to generate sequence numbers for the packets in the packet Stream. The Elimination function 318 includes a Sequence Recovery function 322. The Sequence Recovery function 322 operates on packets passed up the protocol stack towards the higher layer functions and uses the sequence number sub-parameter to decide which packets to pass and which to discard.

In some embodiments, the TX node 302 is part of a Cloud implementation (e.g., part of a Ctrl-cluster as described above with respect to Figure 1).

A Sequencing function of the FRERs 308 and 314 provides the "sequence_number" sub-parameter for FRER functions. In particular, the Sequencing function has two kinds of component functions: (1) a Sequence Generation function (e.g., the Sequence Generation function 320) that operate on packets passed down the protocol stack towards the physical layer and generates a value for the sequence_number sub-parameter and (2) a Sequence Recovery function (e.g., the Sequence Recovery function 322) that operates on packets passed up the protocol stack towards the higher layer functions and uses the sequence_number sub-parameter of the received packets to decide which packets to pass and which to discard.

Embodiments of the solution described herein use the flag introduced by the '379 Application to the R-TAG, namely the *"SeqResetFlag"*. This flag is used as follows:

- When transmitting the Stream of packets, the Replication function 310 at the TX node 302 does not change the *"SeqResetFlag"* value of the packet if a Redundancy Tag (R-TAG) is already included in the header of the packet (i.e., in the header of the corresponding Ethernet frame).
- The Replication function 310 at the TX node 302 sets the *"SeqResetFlag"* (e.g., sets the *"SeqResetFlag"* value=1) for a given time period or for a number of sent packets when the Sequence Generation function 320 is reset.
- The Replication function 310 at the TX node 302 clears the *"SeqResetFlag"* (e.g., sets the *"SeqResetFlag"* value=0) in all other cases.

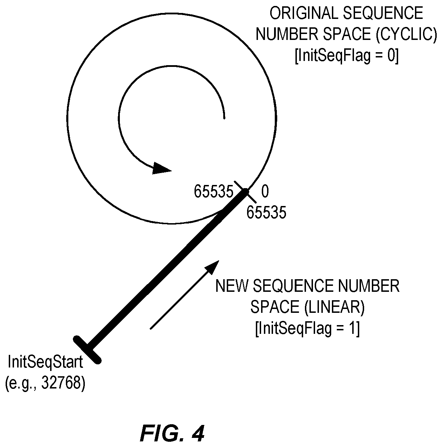

Embodiments of the solution described herein introduce a new additional sequence number space, which is referred to herein as *"InitSeqNumSpace"*, which is used after initialization or reset of the Sequence Generation function 320. The newly introduced *InitSeqNumSpace* is illustrated by the bolded linear sequence number space in Figure 4. The sequence_number of the next packet is stored in a new variable, namely the *"InitGenSeqNum"*. When this new number space is exhausted, the Sequence Generation function 320 starts to use the original sequence number space, which is illustrated by the non-bolded sequence number space in Figure 4. In other words, Figure 4 illustrates an example of the relation of the new (linear) sequence number space and the original (cyclic) sequence number space.

Embodiments of the solution described herein introduce a new flag in the R-TAG, which is referred to as the *"InitSeqFlag"*. This flag is used by the Replication function 310 at the TX node 302 as follows:

- For each packet in the Stream of packets being transmitted by the TX node 302, the Replication function 310 does not change the *"InitSeqFlag"* value of the packet if R-TAG is already included in the header of the packet.
- The Replication function 310 sets the *"InitSeqFlag"* (e.g., sets the *"InitSeqFlag"* value=1) when the Sequence Generation function 320 is initialized or reset. The *"InitSeqNumSpace"* is used by the Replication function 310 to generate the sequence number for the packet.
- The Replication function 310 clears the *"InitSeqFlag"* (e.g., sets the *"InitSeqFlag"* value=0) in all other cases.

The *"InitSeqNumSpace"* is used as follows:

- *"InitSeqNumSpace"* is a linear sequence number space starting with *"InitSeqStart"* (e.g., a configurable parameter set to, in the example of Figure 4) 32768 and ends with "GenSeqSpace-1" (i.e., 65535 as per IEEE 802.1CB-2017).
- *"InitSeqNumSpace"* has its own set of variables that are used to deal with the sequence_number of packets. Note that the *InitSeqNumSpace* variable names are derived from the variable names of the original sequence number via appending them with an *"Init"* prefix, e.g., *"InitGenSeqNum", "InitRecovSeqNum", "InitSequenceHistory", "InitTa-*

*keAny", "InitRemainingTicks",* etc.

- The Replication function 310 at the TX node 302 uses the *"InitSeqNumSpace"* as follows:

  ○ *"UseInitSeqSpace"* is a Boolean state variable showing that the new *"InitSeqNumSpace"* (value=1) has to be used by Sequence Generation function 320 to generate the sequence_number for the next packet.
  ○ Whenever the Sequence Generation function 320 is initialized or reset, *"UseInitSeqSpace"* is set (e.g., value=1) to show that *"InitSeqNumSpace"* must be used to generate the sequence_number for sent packets.
  ○ All packets sent with sequence_number from *"InitSeqNumSpace"* have in their R-Tag the *"InitSeqFlag"* set (e.g., value=1).
  ○ *"InitGenSeqNum"* takes the value of *"InitSeqStart"* whenever the Sequence Generation function 320 is initialized or reset, and incremented by 1 when a packet is sent.
  ○ When *"InitGenSeqNum"* is incremented and becomes greater than its maximum value, *"UseInitSeqSpace"* is cleared (e.g., value=0) to show that *"InitSeqNumSpace"* cannot be used. The Sequence Generation function 320 then uses the original sequence number space for the next packet.
  ○ If *"UseInitSeqSpace"* is clear (value=0), the Sequence Generation function 320 uses "GenSeqNum" to generate the sequence_number of the next packets (i.e., the original sequence number space is used).

Embodiments of the solution herein define a new procedure for the Elimination function 318 at the RX node 304 as well. It uses the new set of variables to handle packets containing sequence_number from the above described *"InitSeqNumSpace"*. The size of the history window is same for both sequence number spaces. The Elimination function 318 operates as follows upon receiving a packet from one of the Member Streams of the Stream transmitted by TX node 302:

- If the *"InitSeqFlag"* flag in the received packet is set (e.g., value=1), the Sequence Recovery function 322 uses the new linear sequence number space (*InitSeqNumSpace*) related variables the following way:

  ○ The Sequence Recovery function 322 sets *"InitRecovSeqNum"* to the "sequence_number" of the packet and clears the *"InitSequenceHistory"*, if the *"SeqResetFlag"* is set and "sequence_number" of the packet is out of the iRIR range { *"InitRecovSeqNum"* + 'frerSeqRcvyHistoryLength"; ... ; *"InitRecovSeqNum"* - 2 x "frerSeqRcvyHistoryLength" + 1 }. Note that the range has to be calculated according to the borders of the new linear sequence number space.
  ○ The Sequence Recovery function 322 ignores the *"SeqResetFlag"* if the "sequence_number" of the packet is within the iRIR range. If the "sequence_number" is out of the iHSW range { *"InitRecovSeqNum"* + "frerSeqRcvyHistoryLength"; ... ; *"InitRecovSeqNum"* - "frerSeqRcvyHistoryLength" + 1 } packet is dropped. If it is within iHSW, then it is checked whether or not the packet has been already received.
  ○ The Sequence Recovery function 322 does not change the *"SeqResetFlag"* and *"InitSeqFlag"* value of the packet.
  ○ The Sequence Recovery function 322 sets the "TakeAny" variable of the original sequence number space if the "sequence_number" of the packet is in the following range { "GenSeqSpace" - "frerSeqRcvyHistoryLength"; ... ; "GenSeqSpace" - 2 x "frerSeqRcvyHistoryLength" }. Note that this range shows that the new initial sequence number space is soon exhausted, i.e., approaching the original sequence number space.

- If the *"InitSeqFlag"* flag in the received packet is clear (value=0), the sequence recovery function uses the original sequence number space related variables.

  ○ The Sequence Recovery function 322 sets the "RecovSeqNum" to the value of the "sequence_number" of the packet and clears the "SequenceHistory" if the *"SeqResetFlag"* is set and the "sequence_number" of the packet is out of the RIR range { "RecovSeqNum" + "frerSeqRcvyHistoryLength"; ... ; "RecovSeqNum" - 2 x "frerSeqRcvyHistoryLength" + 1 }. Note that the range has to be calculated according to the modulo rules of the original sequence number space.
  ○ The Sequence Recovery function 322 ignores the *"SeqResetFlag"* if the "sequence_number" of the packet is within the RIR range. If the "sequence_number" is out of the HSW range, packet is dropped. If it is within HSW, then checked whether or not the packet has been already received.
  ○ The Sequence Recovery function 322 does not change the *"SeqResetFlag"* value of the packet.

Note that the timeout mechanism for the sequence recovery - to accept the next packet, no matter what the value of its sequence_number subparameter (see "TakeAny" variable in 802.1CB-2017 for the original sequence number space) - is not changed and applied for both sequence number spaces.

An implementation may use two variables to enable/disable the use of the reset flag ( *"UsingResetFlag"* = 1/0 (enable/disable) ) and the new initial sequence number space ( *"UsingInitSpace"* = 1/0 (enable/disable) ).

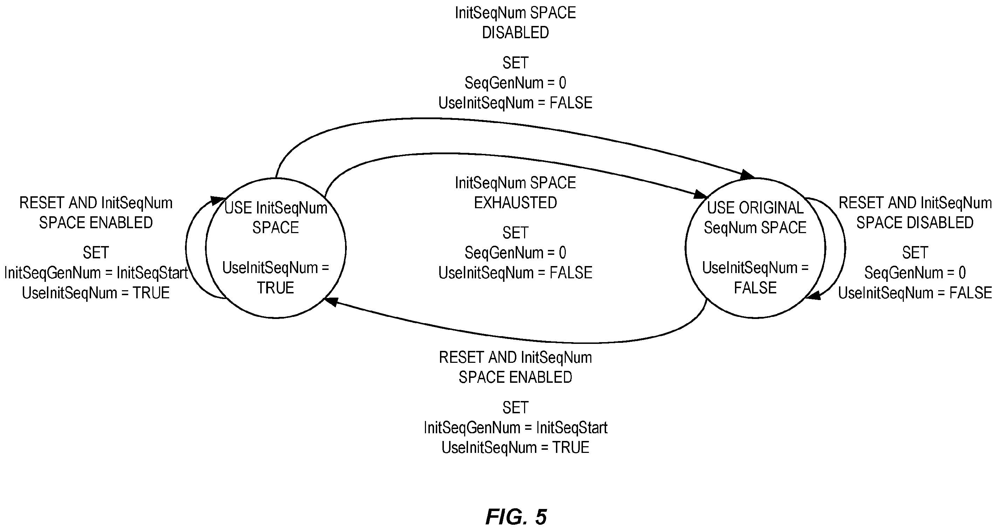

Figure 5 illustrates a state diagram for the Replication function 310 at the TX node 302. As illustrated, when in a first state in which the Replication function 310 uses the original sequence number space and *UsingInitSpace=False,* the Replication function 310 uses the original sequence number space. Upon reset with the initial sequence number space disabled, the Replication function 312 sets *SeqGenNum*=0 and *UseInitSeqNum=False* and remains in the first state. However, upon reset with the initial sequence number space enabled, the Replication function 310 sets *InitSeqGenNum* = *InitSeqStart* and *UseInitSeqNum* = True and transitions to a second state in which the Replication function 310 uses the initial sequence number space. While in the second state, upon reset with the initial sequence number space enabled, the Replication function 310 sets *InitSeqGenNum = InitSeqStart* and *UseInitSeqNum* = True and remains in the second state in which the Replication function 310 uses the initial sequence number space. While in the second state, upon exhausting the initial sequence number space, the Replication function sets *SeqGenNum* = 0 and *UseInitSeqNum* = False and transitions to the first state in which the Replication function uses the original sequence number space. While in the second state, upon the initial sequence number space being disabled, the Replication function sets *SeqGenNum* = 0 and *UseInitSeqNum* = False and transitions to the first state in which the Replication function uses the original sequence number space.

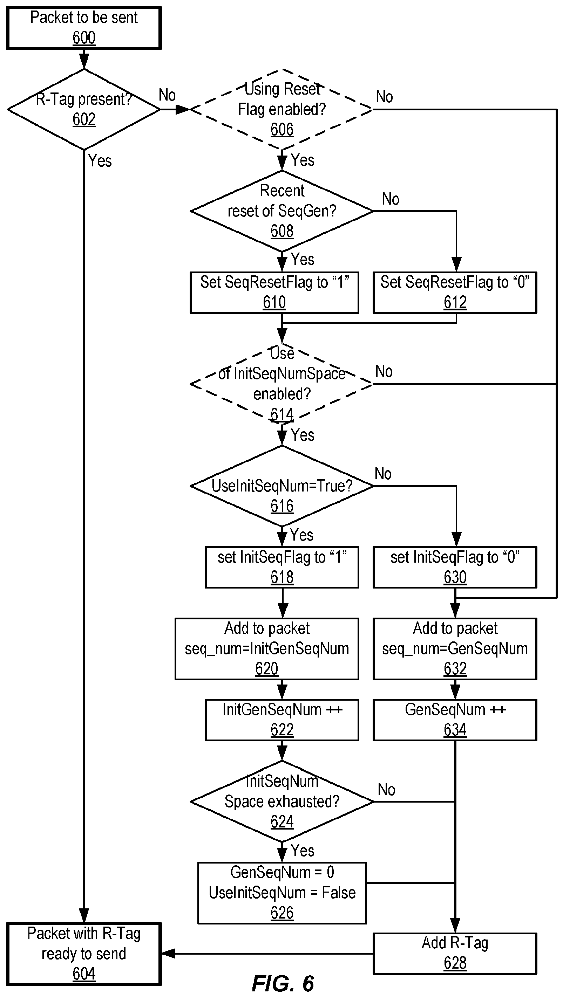

Figure 6 is a flow chart that illustrates the operation of the Replication function 310 at the TX node 302. Optional steps are represented with dashed lines. As illustrated, the Replication function 310 receives a packet (e.g., from a higher layer(s) in the protocol stack) to be sent (step 600). The Replication function 310 determines whether the R-Tag is present or set in the packet (step 602). If so (602, YES), the packet with the R-Tag set is ready to be sent, and as such provided to a lower layer in the protocol stack for transmission (step 604). For instance, multiple copies of the packet may then be generated and sent via different (e.g., disjoint) paths through the TSN network 306. If the R-Tag is not present or set in the packet (step 602, NO), the Replication function 310 determines whether the "UsingResetFlag" is enabled (step 606). If so, the Replication function 310 determines whether the Sequence Generation function 320 has recently been reset (step 608). This is true if a reset has occurred within a predefined or preconfigured amount of time prior to receiving the packet (i.e., the current time) or within a predefined or preconfigured number of packets prior to the receiving the packet. If the Sequence Generation function 320 has recently been reset (step 608, YES), the Replication function 310 enables the "SeqResetFlag" (e.g., set it to a value of "1") (step 610). Otherwise, the Replication function 310 disables the "SeqReset-Flag" (e.g., sets it to a value of "0") (step 612).

Whether proceeding from step 610 or step 612, the Replication function 310 determines whether use of "InitSeqNumSpace" is enabled (step 614). If not (614, NO), the process proceeds to step 632, which is described below. Otherwise (step 614, YES), the Replication function 310 determines whether "UseInitSeqNum" is enabled (e.g., set to "True") (step 616). If so (step 616, YES), the Replication function 310 enables "InitSeqFlag" (e.g., sets it to "1") (step 618), adds a sequence number (seq_num) equal to "InitGenSeqNum" to the packet (step 620), increments "InitGenSeqNum" (step 622), and determines whether the "InitSeqNumSpace" is exhausted (step 624). If not (step 624, NO), the process proceeds to step 628, which is described below. Otherwise (step 624, YES), the Replication function 310 sets "GenSeqNum" equal to "0" and sets "UseInitSeqNum" to False (step 626). Then, whether proceeding from the "NO" branch of step 624 or step 626, the Replication function 310 adds an R-Tag to the packet (step 628) and the procedure proceeds to step 604 where the packet is ready to send.

Returning to step 616, if "UseInitSeqNum" is not set to "TRUE", the Replication function 310 disables the "initSeqFlag" (e.g., sets it to "0") (step 630), adds a sequence number (seq_num) equal to "GenSeqNum" to the packet (step 632), and increments "GenSeqSum" (step 634). The procedure then proceeds to step 628 where an R-Tag is added to the packet and then the packet is ready to be sent.

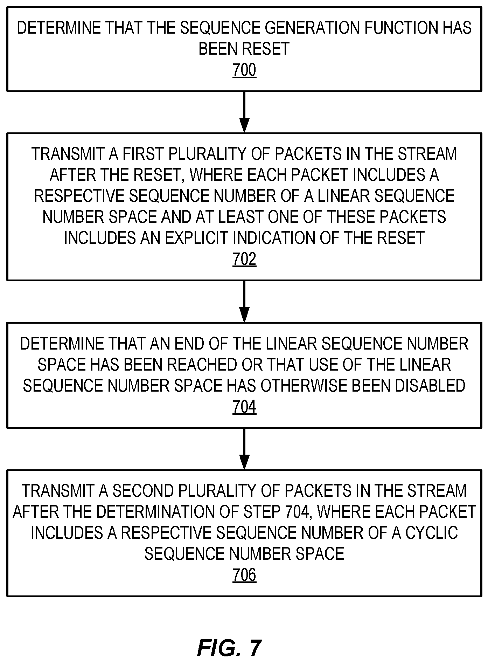

Figure 7 is a flow chart that illustrates the operation of the Replication function 310 at the TX node 302. As illustrated, the Replication function 310 determines that the sequence generation function 310 at the TX node 302 has been reset (step 700). Responsive to determining that the sequence generation function 310 at the TX node 302 has been reset, the Replication function 310 transmits a first plurality of packets in a Stream of packets, wherein: (a) each of the first plurality of packets comprises a respective sequence number from a linear sequence number space and (b) at least a first packet from among the first plurality of packets that was sent after the rest further comprises an explicit indicator of the reset (step 702). The Replication function 310 determines that an end of the linear sequence number space has been reached or that use of the linear sequence number space has been otherwise disabled (step 704). Responsive to determining that the end of the linear sequence number space has been reached or that use of the linear sequence number space has been otherwise disabled, the Replication function 310 transmits a second plurality of packet in the Stream of packets, wherein (a) each of the second plurality of packets comprises a respective sequence number of a cyclic sequence number space (step 706).

Each of the first plurality of packets further comprises an explicit indication that the linear sequence number space is being used.

The network is a TSN network. Further, in one embodiment, the method further comprises resetting the sequence generation function 310, wherein resetting the sequence generation function 310 comprises resetting a sequence number history, a history window (e.g., resetting "RecovSeqNum", which is the midpoint of the history window), or both the sequence number history and the history window. In one embodiment, the steps of determining (700) that the sequence generation function 310 at the TX node 302 has been reset, transmitting (702) the first plurality of packets in the Stream of packets, determining (704) that the end of the linear sequence number space has been reached or that use of the linear sequence number space has been otherwise disabled, and transmitting (706) the second plurality of packet in the Stream of packets are performed by the FRER function 308 of the TX node 302 and, more specifically, by the Replication function 310 of the TX node 302.

The network is a DetNet network. Further, in one embodiment, the steps of determining (700) that the sequence generation function 310 at the TX node 302 has been reset, transmitting (702) the first plurality of packets in the Stream of packets, determining (704) that the end of the linear sequence number space has been reached or that use of the linear sequence number space has been otherwise disabled, and transmitting (706) the second plurality of packet in the Stream of packets are performed by a PRER of the TX node 302.

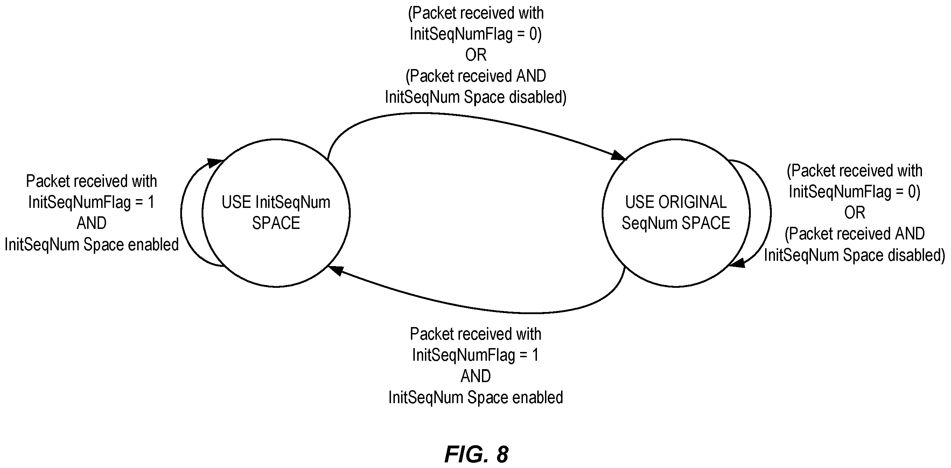

Figure 8 illustrates a state diagram for an example embodiment of the Elimination function 318 at the RX node 304. As illustrated, when in a first state, the Elimination function 318 uses the original sequence number space. When in the first packet state and a packet is received with *InitSeqNumFlag* =0 or a packet is received and the initial sequence number space is disabled, the Elimination function 318 remains in the first state. However, when in the first state and a packet is received with *InitSeqNumFlag* = 1 and the initial sequence number space enabled, the Elimination function 318 transitions to a second state in which the Elimination function 318 uses the initial sequence number space. When in the second state and a packet is received with *InitSeqNumFlag* =1 and the initial number sequence is enabled, the Elimination function 318 remains in the second state. When in the second state and a packet is received with *InitSeqNumFlag* = 0 or a packet is received and initial sequence number space is disabled, the Elimination function 318 transitions to the first state.

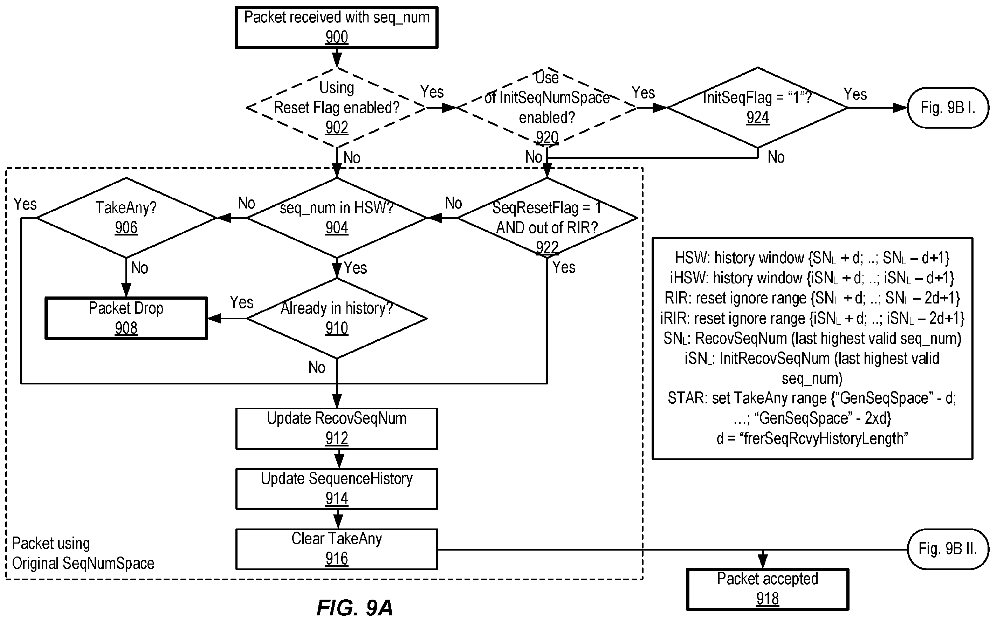

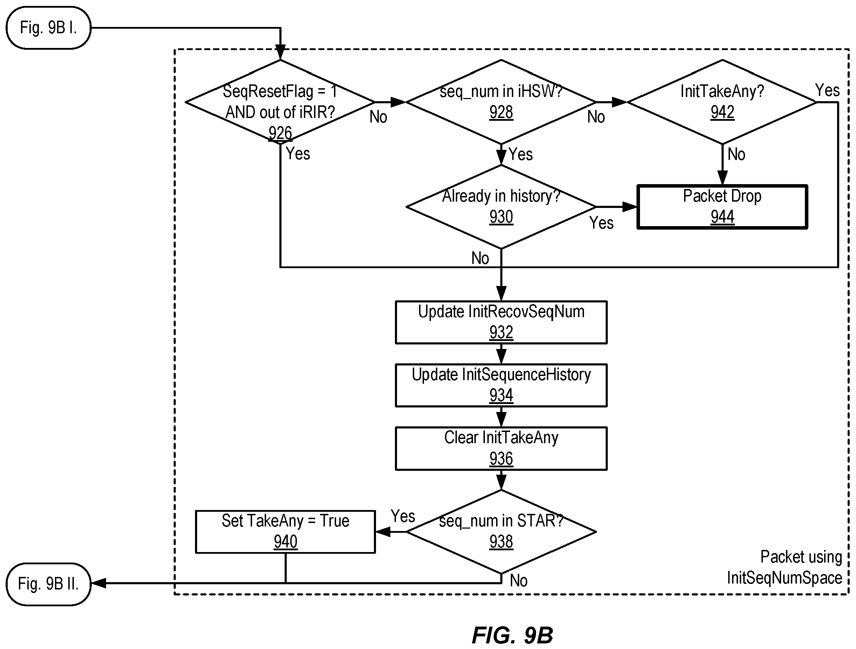

Figures 9A and 9B provide a flow chart that illustrates the operation of the Elimination function 318 at the RX node 304 according to one embodiment of the present disclosure. Optional steps are represented with dashed lines. As illustrated, the Elimination function 318 receives a packet (e.g., from a lower layer(s) in the protocol stack) to be processed (step 900). The packet has a "seq_num" value. The Elimination function 318 determines whether the "UsingResetFlag" is enabled (step 902). If not (step 902, NO), the Elimination function 318 determines whether the sequence number of the packet is in the history window (HSW) (step 904). If not (step 904, NO), the Elimination function 318 determines whether "TakeAny" is enabled (step 904). If not (step 906, NO), the Elimination function 318 drops the packet (step 908). Otherwise, if "TakeAny" is enabled (step 906, YES), the procedure proceeds to step 912, which is described below. Returning to step 904, if the sequence number of the packet is in the HSW (step 904, YES), the Elimination function 318 determines whether the sequence number of the packet is already in the history (step 910). If so (step 910, YES), the Elimination function 318 drops the packet (step 908). Otherwise, if the sequence number of the packet not already in the history (step 910, NO), the procedure proceeds to step 912, which is described below.

Returning to step 902, if "UsingResetFlag" is enabled (step 902, YES), the Elimination function 318 determines whether use of "InitSeqNumSpace" is enabled (step 920). If not (step 920, NO), the Elimination function 318 determines whether "SeqResetFlag" is enabled and the sequence number of the received packet is out of the RIR (step 922). If not (step 922, NO), the procedure proceeds to step 904. Otherwise (step 922, YES), the procedure proceeds to step 912.

Whether proceeding from the YES branch of step 906, the NO branch of step 910, or the YES branch of step 922, the Elimination function 318 then updates the "RecovSeqNum" (step 912), updates the "SequenceHistory" (step 914), clears "TakeAny" (step 916), and accepts the packet (step 918).

Returning to step 920, if use of "InitSeqNumSpace" is enabled (step 920, YES), the Elimination function 318 determines whether "InitSeqFlag" is enabled (step 924). If not (step 924, NO), the process proceeds to step 922. Otherwise (step 924, YES), the Elimination function 318 determines whether "SeqResetFlag" is enabled and the sequence number of the received packet is out of iRIR (step 926). If so (step 926, YES), the procedure proceeds to step 932, which is described below. Otherwise (step 926, NO), the Elimination function 318 determines whether the sequence number of the packet is in iHSW (step 928). If so (step 928, YES), the Elimination function 318 determines whether the packet is already in history (step 930). If no (step 930), the procedure proceeds to step 932. Otherwise (step 932, NO), the Elimination function 318 drops the packet (step 944). Returning to step 928, if the sequence number of the packet is not in iHSW (step 928, NO), the Elimination function 318 determines whether "InitTakeAny" is enabled (step 942). If not (step 942, NO), the Elimination function 318 discards the packet (step 944). Otherwise (step 942, YES), the process proceeds to step 932.

Whether proceeding from the YES branch of step 926, the NO branch of step 930, or the YES branch of step 942, the Elimination function 318 updates the "InitRecovSeqNum" (step 932), updates "InitSequenceHistory" (step 934), and clears "InitTakeAny" (step 936). The Elimination function 318 determines whether the sequence number is in STAR (i.e., the range {"GenSeqSpace" - d; ...; "GenSeqSpace" - 2 x d}) (step 938). If so (step 938, YES), the Elimination function 318 sets "TakeAny" to TRUE (step 940) and the packet is accepted (step 918). Otherwise (step 938, NO), the Elimination function 318 accepts the packet (step 918).

One possible option to encode the *"SeqResetFlag"*, the *"InitSeqFlag"*, and the "new sequence number belonging to the linear sequence number space" in the R-TAG are described in the following:

- in the reserved field (2<sup>nd</sup> and 3<sup>rd</sup> bytes of the R-TAG), and/or
- in the Sequence Number field (4<sup>th</sup> and 5<sup>th</sup> bytes of the R-TAG).

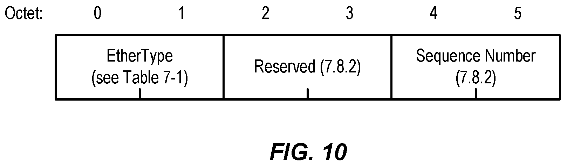

In Figure 10, which illustrates the R-TAG format (Figure 7-4 in IEEE 802.1CB):

- *"SeqResetFlag"* and *"InitSeqFlag"* can be encoded in the R-TAG using 2 bits of the reserved field, one bit for each flag. As per 802.1CB-2017: "This field shall be transmitted with all zeros and shall be ignored on receipt." The "new sequence number belonging to the linear sequence number space" can be encoded in the Sequence Number field of the R-TAG. *"InitSeqFlag"* indicates how to interpret the Sequence Number field.

Other encoding methods can be constructed as well. For example, *"SeqResetFlag"* can be encoded in the R-TAG using the reserved fields using 1 bit, and the "new sequence number belonging to the linear sequence number space" can be encoded in the remaining 15 bits of the reserved fields. Such an encoding includes the information of the sequence number space as well, so no need to explicitly encode the *"InitSeqFlag"*.

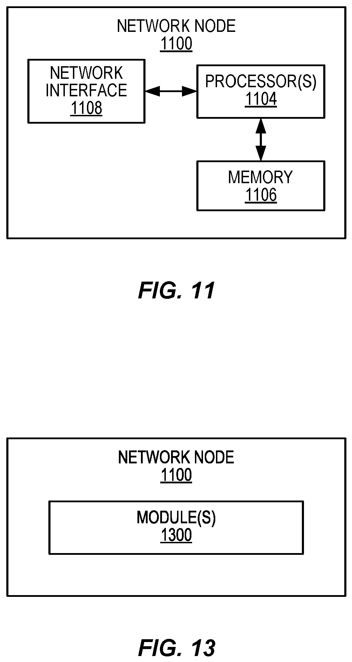

Figure 11 is a schematic block diagram of a network node 1100. The network node 1100 may be the TX node 302 or the RX node 304 described above. As illustrated, the network node 1100 includes one or more processors 1104 (e.g., Central Processing Units (CPUs), Application Specific Integrated Circuits (ASICs), Field Programmable Gate Arrays (FPGAs), and/or the like), memory 1106, and a network interface 1108. The one or more processors 1104 are also referred to herein as processing circuitry. The one or more processors 1104 operate to provide one or more functions of the network node 1100 as described herein (e.g., one or more functions of the TX node 302 or one or more functions of the RX node 304, as described herein). In some embodiments, the function(s) are implemented in software that is stored, e.g., in the memory 1106 and executed by the one or more processors 1104.

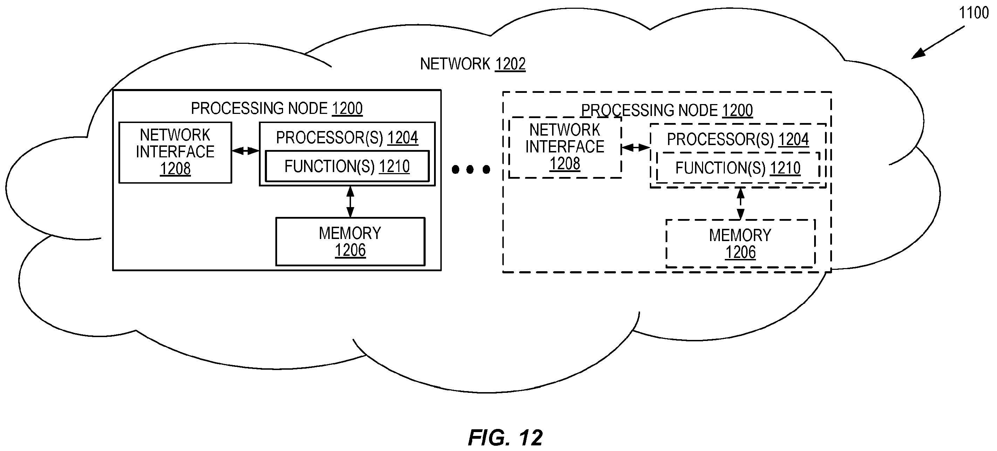

Figure 12 is a schematic block diagram that illustrates a virtualized embodiment of the network node 1100 not part of the present disclosure. This discussion is equally applicable to other types of network nodes. Further, other types of network nodes may have similar virtualized architectures. Again, optional features are represented by dashed boxes.

As used herein, a "virtualized" network node is an implementation of the network node 1100 in which at least a portion of the functionality of the network node 1100 is implemented as a virtual component(s) (e.g., via a virtual machine(s) executing on a physical processing node(s) in a network(s)). As illustrated, in this example, the network node 1100 includes one or more processing nodes 1200 coupled to or included as part of a network(s) 1202. Each processing node 1200 includes one or more processors 1204 (e.g., CPUs, ASICs, FPGAs, and/or the like), memory 1206, and a network interface 1208. In this example, functions 1210 of the network node 1100 described herein (e.g., one or more functions of the TX node 302 or one or more functions of the RX node 304, as described herein) are implemented at one of the processing nodes 1200 or distributed across two or more of the processing nodes 1200 in any desired manner. In some particular embodiments, some or all of the functions 1210 of the network node 1100 described herein are implemented as virtual components executed by one or more virtual machines implemented in a virtual environment(s) hosted by the processing node(s) 1200.

In some embodiments, not part of the invention, a computer program including instructions which, when executed by at least one processor, causes the at least one processor to carry out the functionality of the network node 1100 or a node (e.g., a processing node 1200) implementing one or more of the functions 1210 of the network node 1100 in a virtual is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the network node 1100 according to some other embodiments of the present disclosure. The network node 1100 includes one or more modules 1300, each of which is implemented in software. The module(s) 1300 provide the functionality of the network node 1100 304 described herein (e.g., one or more functions of the TX node 302 or one or more functions of the RX node 304, as described herein). This discussion is equally applicable to the processing node 1200 of Figure 12 where the modules 1300 may be implemented at one of the processing nodes 1200 or distributed across multiple processing nodes 1200.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

**Claims**

1. A method performed by a receive node (304) for packet or frame elimination, the method comprising:

   receiving (900) a packet from one of a plurality of replicated streams that traverse disjoint paths from a transmit node (302) to the receive node (304) through a network, the packet comprising a sequence number;
   determining (924, YES) that the packet comprises an explicit indication that a linear sequence number space is being used, the linear sequence number space being a new additional sequence number space used in addition to an original cyclic sequence number space, wherein the linear sequence number space is used after initialization or reset of a sequence generation function at the transmit node, and wherein, when the linear sequence number space is exhausted or its use is disabled, the sequence generation function at the transmit node starts to use the original cyclic sequence number space;
   determining (926) whether the packet comprises an explicit indication that the sequence generation function (310) at the transmit node (302) has been reset;
   determining (926) whether the sequence number of the packet is outside of a reset ignore range, iRIR, associated with use of the linear sequence number space; and
   responsive to determining that the packet comprises the explicit indication that the linear sequence number space is being used (924, YES) and that the packet comprises the explicit indication that the sequence generation function (310) at the transmit node (302) has been reset and the sequence number of the packet is outside of the iRIR (926, YES), accepting (918) the packet.

2. A receive node (304) for packet or frame elimination, the receive node (304) adapted to:

   receive (900) a packet from one of a plurality of replicated streams that traverse disjoint paths from a transmit node (302) to the receive node (304) through a network, the packet comprising a sequence number;
   determine (924, YES) that the packet comprises an explicit indication that a linear sequence number space is being used, the linear sequence number space being a new additional sequence number space used in addition to an original cyclic sequence number space, wherein the linear sequence number space is used after initialization or reset of a sequence generation function at the transmit node, and wherein, when the linear sequence number space is exhausted or its use is disabled, the sequence generation function at the transmit node starts to use the original cyclic sequence number space;
   determine (926) whether the packet comprises an explicit indication that the sequence generation function (310) at the transmit node (302) has been reset;
   determine (926) whether the sequence number of the packet is outside of a reset ignore range, iRIR, associated with use of the linear sequence number space; and
   responsive to determining that the packet comprises the explicit indication that the linear sequence number space is being used (924, YES) and that the packet comprises the explicit indication that the sequence generation function (310) at the transmit node (302) has been reset and the sequence number of the packet is outside of the iRIR (926, YES), accept (918) the packet.

**Patentansprüche**

1. Verfahren, das von einem Empfangsknoten (304) durchgeführt wird, zur Paket- oder Frame-Eliminierung, wobei das Verfahren umfasst:

   Empfangen (900) eines Pakets von einem einer Vielzahl von replizierten Datenströmen, die über nicht zusammenhängende Pfade von einem Sendeknoten (302) zum Empfangsknoten (304) durch ein Netzwerk queren, wobei das Paket eine Sequenznummer umfasst;

Bestimmen (924, JA), dass das Paket eine explizite Angabe umfasst, dass ein linearer Sequenznummernraum verwendet wird, wobei der lineare Sequenznummernraum ein neuer zusätzlicher Sequenznummernraum ist, der zusätzlich zu einem ursprünglichen zyklischen Sequenznummernraum verwendet wird, wobei der lineare Sequenznummernraum nach Initialisieren oder Zurücksetzen einer Sequenzerzeugungsfunktion am Sendeknoten verwendet wird und wobei, wenn der lineare Sequenznummernraum erschöpft ist oder seine Verwendung deaktiviert ist, die Sequenzerzeugungsfunktion am Sendeknoten damit beginnt, den ursprünglichen zyklischen Sequenznummernraum zu verwenden;

Bestimmen (926), ob das Paket eine explizite Angabe umfasst, dass die Sequenzerzeugungsfunktion (310) am Sendeknoten (302) zurückgesetzt worden ist;

Bestimmen (926), ob die Sequenznummer des Pakets außerhalb eines Rücksetz-Ignorierbereichs, iRIR, liegt, der mit der Verwendung des linearen Sequenznummernraums verknüpft ist; und

als Reaktion auf Bestimmen, dass das Paket die explizite Angabe umfasst, dass der lineare Sequenznummernraum verwendet wird (924, JA) und dass das Paket die explizite Angabe enthält, dass die Sequenzgenerierungsfunktion (310) am Sendeknoten (302) zurückgesetzt worden ist, und die Sequenznummer des Pakets außerhalb des iRIR liegt (926, JA), Akzeptieren (918) des Pakets.

2. Empfangsknoten (304) zur Paket- oder Frame-Eliminierung, wobei der Empfangsknoten (304) angepasst ist, um:

ein Paket von einem einer Vielzahl von replizierten Datenströmen zu empfangen (900), die über nicht zusammenhängende Pfade von einem Sendeknoten (302) zum Empfangsknoten (304) durch ein Netzwerk queren, wobei das Paket eine Sequenznummer umfasst;

zu bestimmen (924, JA), dass das Paket eine explizite Angabe umfasst, dass ein linearer Sequenznummernraum verwendet wird, wobei der lineare Sequenznummernraum ein neuer zusätzlicher Sequenznummernraum ist, der zusätzlich zu einem ursprünglichen zyklischen Sequenznummernraum verwendet wird, wobei der lineare Sequenznummernraum nach Initialisieren oder Zurücksetzen einer Sequenzerzeugungsfunktion am Sendeknoten verwendet wird und wobei, wenn der lineare Sequenznummernraum erschöpft ist oder seine Verwendung deaktiviert ist, die Sequenzerzeugungsfunktion am Sendeknoten damit beginnt, den ursprünglichen zyklischen Sequenznummernraum zu verwenden;

zu bestimmen (926), ob das Paket eine explizite Angabe umfasst, dass die Sequenzerzeugungsfunktion (310) am Sendeknoten (302) zurückgesetzt worden ist;

zu bestimmen (926), ob die Sequenznummer des Pakets außerhalb eines Rücksetz-Ignorierbereichs, iRIR, liegt, der mit der Verwendung des linearen Sequenznummernraums verknüpft ist; und

als Reaktion auf Bestimmen, dass das Paket die explizite Angabe umfasst, dass der lineare Sequenznummernraum verwendet wird (924, JA) und dass das Paket die explizite Angabe enthält, dass die Sequenzgenerierungsfunktion (310) am Sendeknoten (302) zurückgesetzt worden ist, und die Sequenznummer des Pakets außerhalb des iRIR liegt (926, JA), das Paket zu akzeptieren (918).

## Revendications

1. Procédé mis en œuvre par un nœud récepteur (304) pour l'élimination de paquets ou de trames, le procédé comprenant :

la réception (900) d'un paquet provenant de l'un d'une pluralité de flux répliqués qui traversent des trajets disjoints à partir d'un nœud émetteur (302) au nœud récepteur (304) à travers un réseau, le paquet comprenant un numéro de séquence ;

la détermination (924, OUI) que le paquet comprend une indication explicite qu'un espace de numéro de séquence linéaire est utilisé, l'espace de numéro de séquence linéaire étant un nouvel espace de numéro de séquence supplémentaire utilisé en plus d'un espace de numéro de séquence cyclique d'origine, dans lequel l'espace de numéro de séquence linéaire est utilisé après l'initialisation ou la réinitialisation d'une fonction de génération de séquence au niveau du nœud émetteur, et dans lequel, lorsque l'espace de numéro de séquence linéaire est épuisé ou que son utilisation est désactivée, la fonction de génération de séquence au niveau du nœud émetteur commence à utiliser l'espace de numéro de séquence cyclique d'origine ;

la détermination (926) si le paquet comprend une indication explicite que la fonction de génération de séquence (310) a été réinitialisée au niveau du nœud émetteur (302) ;

la détermination (926) si le numéro de séquence du paquet se trouve en dehors d'une plage d'ignorance de réinitialisation, iRIR, associée à l'utilisation de l'espace de numéro de séquence linéaire ; et

en réponse à la détermination que le paquet comprend l'indication explicite que l'espace de numéro de séquence linéaire est utilisé (924, OUI) et que le paquet comprend l'indication explicite que la fonction de génération de séquence (310) a été réinitialisée au niveau du nœud émetteur (302) et que le numéro de séquence du paquet est en dehors de l'iRIR (926, OUI), l'acceptation (918) le paquet.

**2.** Nœud récepteur (304) pour l'élimination de paquets ou de trames, le nœud récepteur (304) étant adapté à :

recevoir (900) un paquet provenant de l'un d'une pluralité de flux répliqués qui traversent des trajets disjoints à partir d'un nœud émetteur (302) au nœud récepteur (304) à travers un réseau, le paquet comprenant un numéro de séquence ;

déterminer (924, OUI) que le paquet comprend une indication explicite qu'un espace de numéro de séquence linéaire est utilisé, l'espace de numéro de séquence linéaire étant un nouvel espace de numéro de séquence supplémentaire utilisé en plus d'un espace de numéro de séquence cyclique d'origine, dans lequel l'espace de numéro de séquence linéaire est utilisé après l'initialisation ou la réinitialisation d'une fonction de génération de séquence au niveau du nœud émetteur, et dans lequel, lorsque l'espace de numéro de séquence linéaire est épuisé ou que son utilisation est désactivée, la fonction de génération de séquence au niveau du nœud émetteur commence à utiliser l'espace de numéro de séquence cyclique d'origine ;

déterminer (926) si le paquet comprend une indication explicite que la fonction de génération de séquence (310) a été réinitialisée au niveau du nœud émetteur (302) ;

déterminer (926) si le numéro de séquence du paquet se trouve en dehors d'une plage d'ignorance de réinitialisation, iRIR, associée à l'utilisation de l'espace de numéro de séquence linéaire ; et

en réponse à la détermination que le paquet comprend l'indication explicite que l'espace de numéro de séquence linéaire est utilisé (924, OUI) et que le paquet comprend l'indication explicite que la fonction de génération de séquence (310) a été réinitialisée au niveau du nœud émetteur (302) et que le numéro de séquence du paquet est en dehors de l'iRIR (926, OUI), accepter (918) le paquet.

**FIG. 1**

**FIG. 2**

EP 4 118 793 B1

**FIG. 3**

ORIGINAL SEQUENCE
NUMBER SPACE (CYCLIC)
[InitSeqFlag = 0]

65535   0
65535

NEW SEQUENCE NUMBER
SPACE (LINEAR)
[InitSeqFlag = 1]

InitSeqStart
(e.g., 32768)

*FIG. 4*

InitSeqNum SPACE
DISABLED

SET
SeqGenNum = 0
UseInitSeqNum = FALSE

RESET AND InitSeqNum
SPACE ENABLED

SET
InitSeqGenNum = InitSeqStart
UseInitSeqNum = TRUE

USE InitSeqNum
SPACE

UseInitSeqNum =
TRUE

InitSeqNum SPACE
EXHAUSTED

SET
SeqGenNum = 0
UseInitSeqNum = FALSE

USE ORIGINAL
SeqNum SPACE

UseInitSeqNum =
FALSE

RESET AND InitSeqNum
SPACE DISABLED

SET
SeqGenNum = 0
UseInitSeqNum = FALSE

RESET AND InitSeqNum
SPACE ENABLED

SET
InitSeqGenNum = InitSeqStart
UseInitSeqNum = TRUE

*FIG. 5*

```
┌─────────────────────┐
│ Packet to be sent   │
│        600          │
└─────────────────────┘
          │
          ▼
     ╱─────────╲          No      ╱─ Using Reset ─╲        No
    ╱ R-Tag present? ╲────────────╱  Flag enabled?  ╲──────────┐
    ╲      602       ╱            ╲       606        ╱          │
     ╲─────────╱                   ╲───────────────╱           │
          │ Yes                          │ Yes                 │
          │                              ▼                      │
          │                      ╱───────────────╲    No        │
          │                     ╱  Recent          ╲───────┐    │
          │                     ╲ reset of SeqGen?  ╱       │    │
          │                      ╲      608       ╱         │    │
          │                       ╲──────────╱              │    │
          │                          │ Yes                  │    │
          │                          ▼                      ▼    │
          │                 ┌──────────────────┐  ┌──────────────────┐
          │                 │ Set SeqResetFlag │  │ Set SeqResetFlag │
          │                 │    to "1"        │  │    to "0"         │
          │                 │      610         │  │      612          │
          │                 └──────────────────┘  └──────────────────┘
          │                          │                      │
          │                          ▼                      │
          │                   ╱── Use ──╲                   │
          │                  ╱ of InitSeqNumSpace ╲   No     │
          │                  ╲    enabled?        ╱──────────┤
          │                   ╲     614         ╱            │
          │                    ╲──────────╱                  │
          │                          │ Yes                   │
          │                          ▼                       │
          │                   ╱───────────────╲    No        │
          │                  ╱ UseInitSeqNum=True? ╲─────┐    │
          │                  ╲       616          ╱      │    │
          │                   ╲───────────╱              │    │
          │                          │ Yes               ▼    │
          │                          ▼          ┌──────────────────┐
          │                 ┌──────────────────┐│ set InitSeqFlag  │
          │                 │ set InitSeqFlag  ││    to "0"         │
          │                 │    to "1"        ││      630          │
          │                 │      618         │└──────────────────┘
          │                 └──────────────────┘          │
          │                          │                     ▼
          │                          ▼          ┌──────────────────┐
          │                 ┌──────────────────┐│  Add to packet   │
          │                 │  Add to packet   ││seq_num=GenSeqNum  │
          │                 │seq_num=InitGenSeqNum│      632         │
          │                 │      620         │└──────────────────┘
          │                 └──────────────────┘          │
          │                          │                     ▼
          │                          ▼          ┌──────────────────┐
          │                 ┌──────────────────┐│  GenSeqNum ++     │
          │                 │ InitGenSeqNum ++ ││      634          │
          │                 │      622         │└──────────────────┘
          │                 └──────────────────┘          │
          │                          │                     │
          │                          ▼                     │
          │                   ╱───────────────╲    No      │
          │                  ╱  InitSeqNum       ╲─────┐    │
          │                  ╲ Space exhausted?  ╱     │    │
          │                   ╲      624        ╱      │    │
          │                    ╲──────────╱            │    │
          │                          │ Yes             │    │
          │                          ▼                 │    │
          │                 ┌──────────────────┐       │    │
          │                 │  GenSeqNum = 0   │       │    │
          │                 │ UseInitSeqNum = False│   │    │
          │                 │      626         │───────┤    │
          │                 └──────────────────┘       │    │
          ▼                                             ▼    ▼
┌─────────────────────┐                        ┌──────────────────┐
│ Packet with R-Tag   │◄───────────────────────│   Add R-Tag      │
│   ready to send     │                        │      628          │
│        604          │                        └──────────────────┘
└─────────────────────┘
```

*FIG. 6*

DETERMINE THAT THE SEQUENCE GENERATION FUNCTION HAS BEEN RESET
700

TRANSMIT A FIRST PLURALITY OF PACKETS IN THE STREAM AFTER THE RESET, WHERE EACH PACKET INCLUDES A RESPECTIVE SEQUENCE NUMBER OF A LINEAR SEQUENCE NUMBER SPACE AND AT LEAST ONE OF THESE PACKETS INCLUDES AN EXPLICIT INDICATION OF THE RESET
702

DETERMINE THAT AN END OF THE LINEAR SEQUENCE NUMBER SPACE HAS BEEN REACHED OR THAT USE OF THE LINEAR SEQUENCE NUMBER SPACE HAS OTHERWISE BEEN DISABLED
704

TRANSMIT A SECOND PLURALITY OF PACKETS IN THE STREAM AFTER THE DETERMINATION OF STEP 704, WHERE EACH PACKET INCLUDES A RESPECTIVE SEQUENCE NUMBER OF A CYCLIC SEQUENCE NUMBER SPACE
706

*FIG. 7*

(Packet received with
InitSeqNumFlag = 0)
OR
(Packet received AND
InitSeqNum Space disabled)

Packet received with
InitSeqNumFlag = 1
AND
InitSeqNum Space enabled

USE InitSeqNum
SPACE

USE ORIGINAL
SeqNum SPACE

(Packet received with
InitSeqNumFlag = 0)
OR
(Packet received AND
InitSeqNum Space disabled)

Packet received with
InitSeqNumFlag = 1
AND
InitSeqNum Space enabled

*FIG. 8*

EP 4 118 793 B1

Packet received with seq_num
900

Using Reset Flag enabled?
902

Yes

Use of InitSeqNumSpace enabled?
920

Yes

InitSeqFlag = "1"?
924

Yes

Fig. 9B I.

No

No

No

Packet using Original SeqNumSpace

Yes

TakeAny?
906

No

seq_num in HSW?
904

No

SeqResetFlag = 1 AND out of RIR?
922

No

Yes

HSW: history window {$SN_L + d$; ..; $SN_L - d+1$}
iHSW: history window {$iSN_L + d$; ..; $iSN_L - d+1$}
RIR: reset ignore range {$SN_L + d$; ..; $SN_L - 2d+1$}
iRIR: reset ignore range {$iSN_L + d$; ..; $iSN_L - 2d+1$}
$SN_L$: RecovSeqNum (last highest valid seq_num)
$iSN_L$: InitRecovSeqNum (last highest valid seq_num)
STAR: set TakeAny range {"GenSeqSpace" - d; ...; "GenSeqSpace" - 2xd}
$d$ = "frerSeqRcvyHistoryLength"

No

Packet Drop
908

Yes

Already in history?
910

Yes

No

Update RecovSeqNum
912

Update SequenceHistory
914

Clear TakeAny
916

Fig. 9B II.

Packet accepted
918

**FIG. 9A**

Fig. 9B I.

SeqResetFlag = 1 AND out of iRIR? **926** — No → seq_num in iHSW? **928** — No → InitTakeAny? **942** — Yes →

SeqResetFlag = 1 AND out of iRIR? **926** — Yes ↓

seq_num in iHSW? **928** — Yes ↓

InitTakeAny? **942** — No ↓

Already in history? **930** — Yes → Packet Drop **944**

Already in history? **930** — No ↓

Update InitRecovSeqNum **932**

Update InitSequenceHistory **934**

Clear InitTakeAny **936**

Set TakeAny = True **940** ← Yes — seq_num in STAR? **938** — No →

Fig. 9B II.

Packet using InitSeqNumSpace

**FIG. 9B**

Octet:　　0　　　1　　　2　　　3　　　4　　　5

| EtherType (see Table 7-1) | Reserved (7.8.2) | Sequence Number (7.8.2) |
|---|---|---|

**FIG. 10**

NETWORK NODE
1100

NETWORK
INTERFACE
1108

PROCESSOR(S)
1104

MEMORY
1106

**FIG. 11**

NETWORK NODE
1100

MODULE(S)
1300

**FIG. 13**

**FIG. 12**

EP 4 118 793 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 62989340 A

- WO 2021005397 A1

**Non-patent literature cited in the description**

- **BALÁZS VARGA et al.** 802.1CB Improvements - FRER Improvements of Replication and Elimination Functions. *IEEE 802.1 TSN TG*, 2019

- Frame Replication and Elimination for Reliability'', FRER. *IEEE Std 802.1CB-2017*